# EUROPÄISCHE PATENTSCHRIFT

(11) **EP 1 616 979 B1**
(45) Veröffentlichungstag und Bekanntmachung des Hinweises auf die Patenterteilung: **28.10.2009**
(21) Anmeldenummer: 05014507.7
(22) Anmeldetag: 05.07.2005
(51) Int. Cl.: C23C 30/00, C23C 28/00, C23C 4/12, C23C 10/06, C23C 10/34

(54) **Schutzschicht zum Aufbringen auf ein Substrat und Verfahren zur Herstellung einer Schutzschicht**
Applying a protective coating on a substrate and method for manufacturing the protective layer
D'application d'une couche protectrice sur un substrat et procédé de dêpot d'une couche protectrice

(30) Priorität: 16.07.2004 DE 102004034410
(43) Veröffentlichungstag der Anmeldung: 18.01.2006
(73) Patentinhaber: MTU Aero Engines GmbH, 80995 München (DE)
(72) Erfinder: Kassner, Stefan, 01187 Dresden (DE); Niedermaier, Markus, 80469 München (DE); Pillhöfer, Horst, 85244 Röhrmoos (DE)

(56) Entgegenhaltungen:
- EP-A- 0 933 448
- EP-A- 0 979 881
- EP-A- 1 088 907
- DE-A1- 10 065 924
- US-A- 5 455 071
- US-B1- 6 485 845

## Beschreibung

Die vorliegende Erfindung betrifft eine hochtemperatur-, oxidations- und korrosionsbeständige Schutzschicht zum Aufbringen auf ein Substrat, insbesondere zum Aufbringen auf Teile von Turbinen oder Flugtriebwerken, bestehend aus einer Spritzschicht aus einem mittels APS-Verfahren gespritzten, metallischen Werkstoff, wobei nach dem Aufbringen der Spritzschicht auf das Substrat diese zumindest teilweise einem thermochemischen Abscheideprozess mit spezifisch hoher Aluminiumabscheideaktivität unterzogen wird. Die Erfindung betrifft weiterhin ein Verfahren zur Herstellung dieser Schutzschicht sowie deren Verwendung.

Derartige Korrosions- und Oxidationsschutzschichten sind bekannt und werden insbesondere in Teilen von Turbinen oder Flugtriebwerken wie auch Brennkammern eingesetzt. Als Heißkorrosionsschutzschichten werden sogenannte MCrAlY-Auflageschichten verwendet, wie sie zum Beispiel in der US-A-4080486, der EP-B1-0486489 und der US-A-4585481 beschrieben sind. Zudem können diese MCrAlY-Auflageschichten als Haftvermittler oder als Haftschicht zwischen dem metallischen Substrat, auf das die Schutzschicht aufgetragen wird, und einer keramischen Deckschicht verwendet werden, siehe hierzu u. a. das Dokument EP-A-0 979 881. Die Aufbringung der Schutzschicht erfolgt dabei insbesondere durch thermische Spritzverfahren, wie z. B. Flammspritzen, Hochgeschwindigkeitsflammspritzen, Detonationsspritzen, Plasmaspritzen, Lichtbogenspritzen, Laserspritzen oder Schmelzbadspritzen. Qualitativ beste Resultate werden durch das sogenannte Niederdruck-Plasmasprayverfahren (LPPS) erzielt, da hier geschlossene und dichte Schichten entstehen. Andere Plasmaspritzverfahren, wie z. B. das atmosphärische Plasmaspritzen (APS) erzielen schlechtere Resultate. So ist zwar das APS-Verfahren das kostengünstigste Verfahren, die resultierenden Spritzschichten weisen aber eine sehr hohe Anzahl von Poreneinschlüssen und insbesondere verbundenen Oxideinschlüssen und Oxidschlieren auf. Aus diesem Grund weisen die mittels des APS-Verfahrens erzeugten Schichten hinsichtlich ihrer Heißgaskorrosionsbeständigkeit bei Temperaturen im Bereich von 1000°C im Vergleich zu anderen Plasmaspritzverfahren die niedrigsten Qualitäten auf. Insbesondere die bei dem APS-Verfahren vermehrt auftretenden Oxid- und Nitrideinschlüsse sowie die Verbindung dieser Einschlüsse zu räumlichen Netzwerken stellen bei höheren Temperaturen ideale Migrationswege für u. a. O₂ dar, wodurch diese Schichten relativ Korrosionsanfällig sind. Andererseits weist das APS-Verfahren verschiedene Vorteile auf. Insbesondere ist es im Vergleich zu den anderen Plasmaspritzverfahren ein kostengünstiges Aufbringverfahren. Zudem ist eine große Variationsmöglichkeit der Zusammensetzung des metallischen Werkstoffes, insbesondere der Pulverzusammensetzung möglich. Des Weiteren können neben der chemischen Zusammensetzung auch die Partikelgrößen und die Schichtgradierung in verschiedenen Lagen variiert werden. Zudem ist es möglich, dass definierte Oberflächenrauhigkeiten für die Verklammerung von keramischen Deckschichten mit der Schutzschicht eingestellt werden.

Zur Verbesserung der Eigenschaften von APS-gespritzten Schichten sind verschiedene Verfahren bekannt. So beschreibt die DE-A-2414992 ein Verfahren zur Verbesserung der Hochtemperatur-Korrosionsbeständigkeit eines Nickelbasis- oder Kobaltbasis-Superlegierungskörpers. Hierbei wird der Superlegierungskörper zunächst durch physikalische Dampfabscheidung mit einer Zusammensetzung überzogen, die im Wesentlichen aus Chrom, Aluminium und einem Teil, der aus Yttrium und den seltenen Erdenelementen bestehenden Gruppe ausgewählt ist, und wenigstens einem Element besteht, das aus der Eisen, Kobalt und Nickel bestehenden Gruppe ausgewählt ist. Anschließend wird der überzogene Körper durch chemische Dampfabscheidung aluminisiert, um die Korrosionsbeständigkeit des Körpers zu erhöhen. Durch den aluminisierenden Überzug sollen Korngrenzen des ersten Überzuges, die in einer zur Abscheidungsebene senkrechten Richtung orientiert sind, verschlossen werden. Auch die DE-T2-69536781 beschreibt ein Verfahren zum Verbessern der Oxidationsbeständigkeit einer auf einem Nickelbasis-Superlegierungssubstrat gebildeten Platin-modifizierten Aluminit-Beschichtung. Dabei wird zunächst eine Platinlage auf dem Substrat bereitgestellt. Anschließend erfolgt die Alumisierung der Platinlage.

Nachteilig an diesem bekannten Verfahren ist jedoch, dass hier mindestens zwei Beschichtungsschritte zur Modifizierung der aus metallischem Werkstoff gebildeten Spritzschicht notwendig sind. Zudem sind die genannten Verfahren nicht geeignet, die in Spritzschichten gebildeten und miteinander verbundenen Netzwerke der Oxid- und Nitrideinschlüsse zu zerstören. Aufgrund der Aufwändigkeit der bekannten Verfahren sind diese auch teuer.

Es ist daher Aufgabe der vorliegenden Erfindung eine hochtemperatur-, oxidations- und korrosionsbeständige Schutzschicht zum Aufbringen auf ein Substrat, insbesondere zum Aufbringen auf Teile von Turbinen oder Flugtriebwerken bereitzustellen, die einerseits kostengünstig herstellbar ist und andererseits eine verbesserte thermische Korrosionsbeständigkeit aufweist.

Es ist des Weiteren Aufgabe der vorliegenden Erfindung ein Verfahren zur Herstellung einer hochtemperatur-, oxidations- und korrosionsbeständigen Schutzschicht bereitzustellen, welches relativ einfach und kostengünstig durchführbar ist.

Gelöst werden diese Aufgaben durch eine Schutzschicht und ein Verfahren gemäß den in den unabhängigen Ansprüchen 1 und 10 beschriebenen Merkmalen und Verfahrensschritten.

Vorteilhafte Ausgestaltungen sind in den jeweiligen Unteransprüchen beschrieben.

Eine erfindungsgemäße hochtemperatur-, oxidations- und korrosionsbeständige Schutzschicht zum Aufbringen auf ein Substrat, insbesondere zum Aufbringen auf Teile von Turbinen oder Flugtriebwerken, besteht aus einer Spritzschicht aus einem mittels APS-verfahren gespritzten, metallischen Werkstoff nach Anspruch 1, wobei nach dem Aufbringen der Spritzschicht auf das Substrat diese zumindest teilweise einem thermochemischen Abscheideprozess mit spezifisch hoher Aluminiumabscheideaktivität unterzogen wird, derart, dass die Schutzschicht von der Substratoberfläche zur Schichtoberfläche einen steigenden Legierungsgradienten an Al und Cr oder Al und Si oder Al und Cr und Si sowie isolierte globulitische Metalloxidpartikel aufweist. Bei der erfindungsgemäßen Schutzschicht sind die in der Spritzschicht vorhandenen Porositäten versiegelt, so dass in der Schutzschicht Oxid- und/oder Nitridpartikel in isolierter, globulitischer Form angeordnet sind. Durch das Nicht-Vorhandensein bzw. die Zerstörung der ursprünglich vorhandenen Netzwerke der miteinander verbundene Oxid- und/oder Nitridpartikel beziehungsweise -einschlüsse sind die Migrationswege innerhalb der Schutzschicht auf ein Minimum reduziert, wodurch die Schutzschicht verbesserte Hochtemperatur-, Oxidations- und Korrosionsbeständigkeiten aufweist. Auch die in den äußeren Bereichen der Schutzschicht hohen Aluminiumanteile tragen entscheidend zu dieser Qualitätsverbesserung bei.

Dabei ist der metallische Werkstoff gemäß der Formal MCrAlXAE mit M = Fe, Co, Ni, NiCo oder CoNi, X = Si, Ta, V, Nb, Pt, Pd und AE = Y, Ti, Hf, Zr, Yb wie folgt zusammengesetzt (in Gewichtsprozent): 10 - 45% Cr, 1 - 10% Al, 0,25 - 15% X, 0,05 - 2% AE und Rest M als Matrixhauptelement.

In einer vorteilhaften Ausgestaltung der Schutzschicht liegt der metallische Werkstoff in Pulverform vor, wobei die mittlere Partikelgröße des Pulvers zwischen 2µm und 80 µm liegt. Die Spritzschicht weist üblicherweise eine mittlere Schichtdicke zwischen 50 µm und 400 µm auf.

In einer weiteren vorteilhaften Ausgestaltung der erfindungsgemäßen Schutzschicht beträgt der Al-Anteil im Bereich der Schichtoberfläche zwischen 25 und 40 Gew.-%, in den darunter liegenden Bereichen der Schutzschicht zwischen 20 und 40 Gew.-% und im Übergangsbereich zwischen der Schutzschicht und dem Substrat unter 20 Gew.-%.

Die erfindungsgemäß vorliegenden isolierten globulitischen Metalloxidpartikel weisen eine mittlere Partikelgröße zwischen 0,1 µm und 5 µm bei einer maximalen Größe von Einzelpartikeln von bis zu 25 µm auf. Der Volumenanteil der isolierten globulitischen Metalloxidpartikel in der Schutzschicht beträgt zwischen 0,2 und 6%, vorzugsweise 0,5 bis 2%. Insbesondere bestehen die globulitischen Metalloxidpartikel aus Al₂O₃ und Cr₂O₃.

In einer weiteren vorteilhaften Ausgestaltung der erfindungsgemäßen Schutzschicht ist an der Schichtoberfläche eine keramische Deckschicht ausgebildet. Dadurch entsteht vorteilhafterweise eine Wärmedämmschicht auf einem entsprechend thermisch belasteten Substrat, wie z. B. einem Turbinenbauteil. Es ist auch möglich, dass zwischen der Schichtoberfläche und der keramischen Deckschicht eine Zwischenschicht bestehend aus Pt und/oder Pd mit einer Schichtdicke zwischen 0,1 und 10 µm ausgebildet ist. Dadurch werden die Wärmedämmeigenschaften der Schutzschicht nochmals verbessert.

Verwendung findet die erfindungsgemäße hochtemperatur-, oxidations- und korrosionsbeständige Schutzschicht insbesondere bei der Beschichtung und/oder Ausbesserung von Turbinen- und Triebwerksteilen, insbesondere von Gasturbinen in Flugtriebwerken.

Ein erfindungsgemäßes Verfahren zur Herstellung einer hochtemperatur-, oxidations- und korrosionsbeständigen Schutzschicht umfasst folgende Verfahrensschritte: a) Bereitstellung einer Spritzschicht durch atmosphärisches Plasmaspritzen (APS-Verfahren) aus einem metallischen Werkstoff zum Aufbringen auf ein Substrat, insbesondere zum Aufbringen auf Teile von Turbinen oder Flugtriebwerken und b) Behandeln von zumindest einem Teil der Spritzschicht mittels eines thermochemischen Abscheideprozesses mit spezifisch hoher Aluminiumabscheideaktivität, derart, dass die Schutzschicht von der Substratoberfläche zur Schichtoberfläche einen steigenden Legierungsgradienten an Al und Cr oder Al und Si oder Al und Cr und Si sowie isolierte globulitische Metalloxidpartikel aufweist, wobei vor dem thermochemischen Abscheideprozess auftretende Oxid- und Nitridnetzwerke nicht mehr vorhanden sind. Durch die Verwendung eines APS-Verfahrens zum thermochemischen Behandeln von zumindest einem Teil der Spritzschicht, kann einerseits ein einfaches und kostengünstiges Verfahren bereitgestellt werden. Andererseits werden bei dem erfindungsgemäßen Verfahren durch das gezielte thermochemische Behandeln definiert Porositäten in der Spritzschicht versiegelt, Oxiddispersionspartikel in isolierte, globulitische Form übergeführt und entsprechend angeordnet und ein definierter Legierungsgradient von Al und Cr oder Al und Si oder Al und Cr und Si von der Substratoberfläche zur Schichtoberfläche erzeugt. Es erfolgt eine Al-Anreicherung in den äußeren Schichten der Schutzschicht. Die durch das Verfahren hergestellten Schutzschichten weisen deutlich verbesserte Hochtemperatur-, Oxidations- und Korrosionsbeständigkeiten auf. Erfindungsgemäß werden die Vorteile von APS-gespritzten Spritzschichten, die eine freie Legierungsauswahl, hohe Schichtdicken und einen hohen DBTT-Punkt erlauben, mit den Vorteilen von Al-Diffusionsschichten, nämlich einem hohen Oxidationswiderstand bei einer hohen Temperaturbelastbarkeit verbunden.

Dabei umfasst der thermochemische Abscheideprozess gemäß Verfahrensschritt b) folgende unterschritte: b1) Aufheizen der Spritzschicht bzw. des Substrats mit der Spritzschicht in oxidierender Umgebung bezogen auf die Metalloxide der Spritzschicht; b2) Abgabe von Al und Cr oder Al und Si oder Al und Cr und Si über eine Gasphase oder durch direkten Kontakt bei Al-Gehalten der Umgebung von 25 bis 45 Gew.-% Al; und b3) Abkühlen der Spritzschicht bzw. des Substrats mit der Spritzschicht in oxidierender Umgebung. Dabei kann im Verfahrensschritt b1) die Spritzschicht bzw. das Substrat mit der Spritzschicht auf bis zu 1100°C in einer gasförmigen Umgebung aus Ar, He und Anteilen von O₂ und/oder H₂O erhitzt werden, wobei der Partialdruck von O₂ in der gasförmigen Umgebung im chemischen Gleichgewicht mindestens um den Faktor 2 bis 10 höher ist als der Partialdruck von O₂ bei der Zersetzungsreaktion der in der Spritzschicht enthaltenen Metalloxide. Üblicherweise ist in der gasförmigen Umgebung bei Normaldruck ein O₂-Partialdruck von 1000-40000 Pa (10 bis 400 mbar), vorzugsweise 2000-30 000 Pa (20 bis 300 mbar), bei einem Aufheizen bis zu 1100°C eingestellt. Des Weiteren kann die Abgabe von Al und Cr oder Al und Si oder Al und Cr und Si gemäß Verfahrensschritt b2) bei Temperaturen zwischen 900°C und 1150°C über eine Prozesshaltedauer zwischen 2 und 14 Stunden erfolgen. In einer vorteilhaften Ausgestaltung des erfindungsgemäßen Verfahrens erfolgt die Abgabe von Al und Cr oder Al und Si oder Al und Cr und Si gemäß dem verfahrensschritt b2) über eine Gasphase, wobei die Gasphase Monohalogenid-Aluminiumverbindungen aufweist. Die Monohalogenid-Aluminiumverbindungen weisen dabei einen Partialdruckanteil am Gesamtsystem zwischen 2,5 und 25%, vorzugsweise 5 bis 20% auf.

Weitere Einzelheiten, Merkmale und Vorteile der Erfindung ergeben sich aus den in den Figuren dargestellten Ausführungs- und Anwendungsbeispielen. Es zeigen
- Figur 1a: eine schematische Darstellung des Gefüges einer auf ein Substrat aufgetragenen Spritzschicht der erfindungsgemäßen Schutzschicht vor einem thermochemischen Abscheideprozess;
- Figur 1b: eine schematische Darstellung des Gefüges der Spritzschicht gemäß Figur 1a nach dem thermochemischen Abscheideprozess;
- Figur 2a: die Darstellung eines Querschliffes einer Spritzschicht der erfindungsgemäßen Schutzschicht vor der thermochemischen Behandlung; und
- Figur 2b: eine Darstellung eines Querschliffes der Spritzschicht gemäß Figur 2a nach der thermochemischen Behandlung.

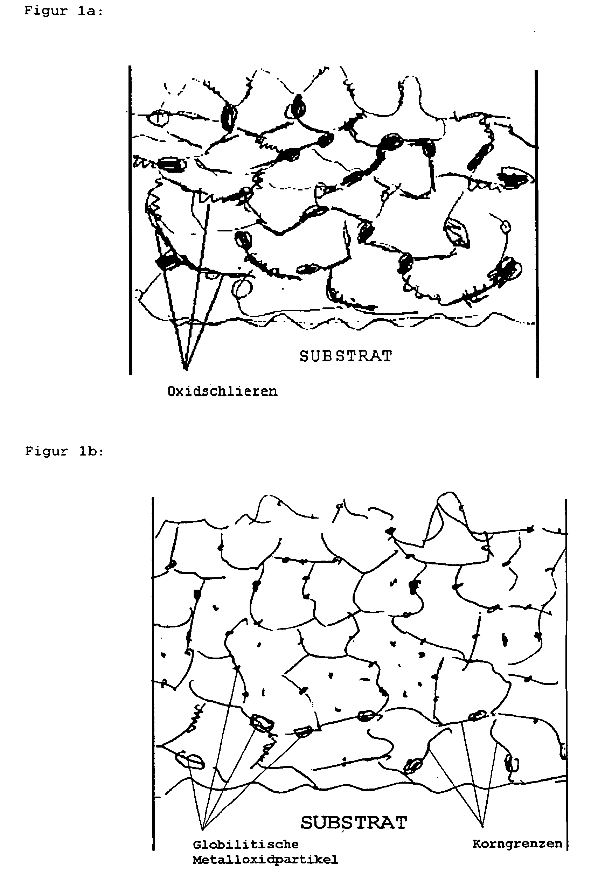

Figur 1a zeigt in einer schematischen Darstellung das Gefüge einer Spritzschicht aus einem thermisch gespritzten, vornehmlich metallischen Werkstoff, der auf ein Substrat, insbesondere auf Teile von Turbinen oder Flugtriebwerken, aufgebracht worden ist. Man erkennt miteinander verbundene Oxidschlieren sowie spratzige Partikel auf den Verbindungsflächen bzw. den Korngrenzen. Auch wird die dichte, zusammenhängende Oxidbelegung der Spritzschicht deutlich.

Figur 1b zeigt die Ausgestaltung der Spritzschicht bzw. der Schutzschicht nach einem zumindest teilweise erfolgten thermochemischen Aluminium(Cr, Si)-Abscheideprozess mit spezifisch hoher Aluminiumabscheideaktivität. Man erkennt, dass nach der thermochemischen Behandlung Leerräume bzw. Poren durch die Behandlung ausgeheilt bzw. durch Aufnahme von Al(Cr, Si) ins Metallgitter Leerstellen aufgefüllt worden sind. Zudem sind isolierte, globulitische Metalloxidpartikel erkennbar. Die vor der thermochemischen Behandlung auftretenden Oxid- und/oder Nitridnetzwerke sind nicht mehr vorhanden.

Im Folgenden werden ein nicht erfindungsgemäßes Beispiel der Schutzschicht und drei verschiedene Anwendungsvarianten eines Verfahrens näher erläutert:

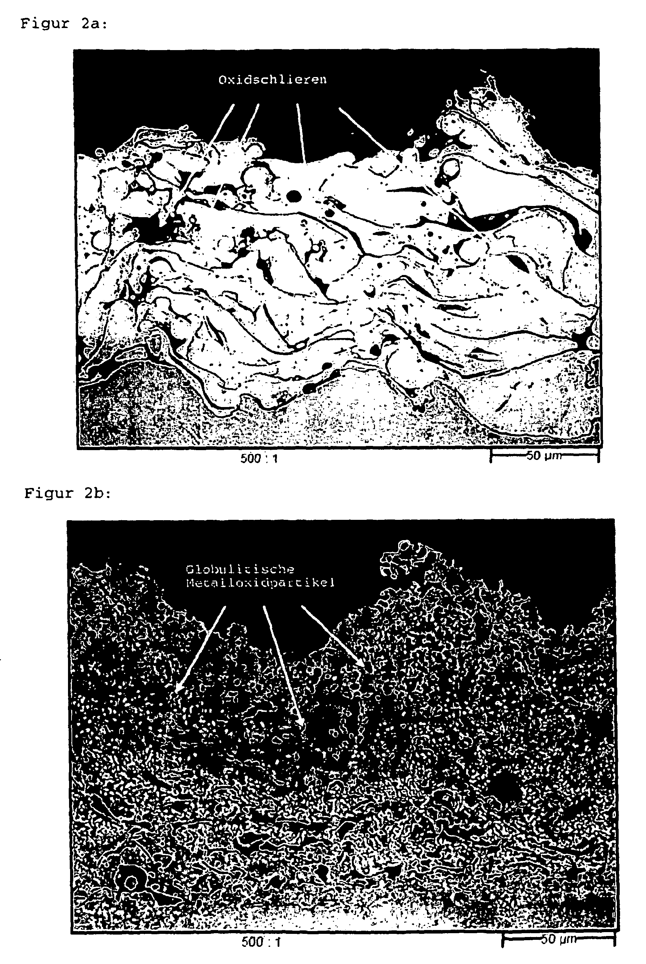

Ein metallischer, pulverförmiger Werkstoff aus einem NiCrAlY-Gemisch mit der mittleren Zusammensetzung (in Gewichtsprozent): 20% Cr, 8% A1, 1% Y, Rest Nickel, mit einer Partikelgröße von ca. 60 µm, wird mittels eines atmosphärischen Plasmaspritzverfahrens (APS) mit Ar/H₂ als Fördergas in einer Spritzpistole als eine durchschnittlich 200 µm mächtige Schicht auf eine Turbinenschaufel mit ca. 250 mm Bauteillänge und bestehend aus einer Nickelbasislegierung Rene 80 aufgespritzt. Die Schicht wird dabei vornehmlich auf die Ein- und Austrittskante des Schaufelprofils oder auf die Außen- und Innendeckbänder aufgespritzt. In Figur 2a ist ein Querschliff dieser Spritzschicht dargestellt. Man erkennt die vernetzten Oxidschlieren und eingelagerten Poren. Der Gesamtanteil der Metalloxide und Poren beträgt ca. 5 Vol.-%. Dieser kann allerdings 0,5 bis 10 Vol.-% schwanken. Bei nicht thermisch gespritzten, d. h. bei Raumtemperatur aufgebrachten Schichten wie z. B. Sol-Gel-Schichten kann der Porenanteil bis zu 20 Vol.-% erreichen.

Das APS-gespritzte Bauteil wird anschließend einem thermochemischen Aluminium(Cr, Si)-Abscheideprozess mit spezifisch hoher Aluminiumabscheideaktivität unterzogen. Dabei wird in einem ersten Verfahrensschritt die Spritzschicht bzw. das Bauteil mit der Spritzschicht in einer Argonatmosphäre bei Normaldruck von Raumtemperatur bis 950°C aufgeheizt. Der Sauerstoffpartialdruck wird dabei in einem Bereich zwischen (20000 - 60000 Pa (200 und 600 mbar) eingestellt, wobei dies durch gezielt Zugabe von O₂ über ein Nadelventil erfolgt. Um dies zu erreichen erfolgt eine Zugabe von 560 l/h Ar und 0,2 l/h O₂ zu dem Reaktionsraum. Ab ca. 900°C erfolgt keine weitere O₂-Zugabe. In einem weiteren Verfahrensschritt wird die Temperatur von 950°C auf 1080°C erhöht. Das Bauteil wird bei dieser Temperatur in einer Art Gasatmosphäre bestehend aus ca. 20% Aluminiummonofluorid, 5% Aluminiumtrifluorid und Rest Argon gehalten. Dabei wird die Gas- bzw. Prozessatmosphäre durch die Reaktion von pulverförmig zugegebenen AlF3- und AlCr-Partikeln mit einem Al-Gehalt von 50 bis 55 Gew.-% erzeugt. Anschließend werden die Bauteile von 1080°C bis auf Raumtemperatur in der Argonatmosphäre mit einem O₂-Partialdruck von 20 bis 50 mbar abgekühlt. Dies erfolgt durch ein halbstündiges Spülen der Prozessatmosphäre mit einer Spülrate, die größer ist als die 40fache Volumenaustauschrate bezogen auf das Reaktionsgasvolumen im Temperaturbereich zwischen 1080°C und 1000°C und einer Spülrate, die einer fünf- bis zweifachen Volumenaustauschrate im Temperaturbereich von 1000°C bis Raumtemperatur entspricht.

Figur 2b zeigt die resultierende Spritzschicht nach dieser thermochemischen Behandlung. Man erkennt die deutlich isolierten globulitischen Metalloxidpartikel mit einer Partikelgröße zwischen 1 und 10 µm und einem Flächenanteil von 2% in den äußeren 80% der Spritzschicht. Die Aluminiumkonzentration beträgt in den äußeren 20% der Spritzschicht ca. 32 Gew.-%, in den weiteren 50% der Spritzschicht ca. 26 Gew.-% und im restlichen Bereich, d. h. im Bereich des Schicht-Substrat-Übergangs, ca. 10 Gew.-%.

Das APS-gespritzte Bauteil kann alternativ hierzu auch in einen Reaktionsraum mit einer Schüttung aus intermetallischem AlCr-Spendergranulat und 240g pulverförmigem Metallchloridsalz, hier MgCl₂ gegeben werden. Der Reaktionsraum hat dabei eine Größe von 120 1 und ist mit Zuleitungen für Wasserstoff und Argon versehen. Mittels eines gasdurchlässigen Al₂O₃-Filzes wird der Reaktionsraum gegenüber der Umgebung abgedichtet. In einem ersten Schritt wird das Bauteil mit der Spritzschicht in Argonatmosphäre bei leichtem Überdruck bis 900°C aufgeheizt. Hierfür wird der Reaktionsraum vor dem Aufheizen mit fünffacher Volumenaustauschrate mit Argon und während des Aufheizens mit 10 1/h Ar zur Erzielung eines Überdrucks von 30 mbar gegenüber Normaldruck gespült. Bei ca. 900°C erfolgt für eine Stunde eine Zugabe von 10 1/h H₂. In einem weiteren Schritt wird die Temperatur ohne weitere Zugabe von Ar oder H₂ auf 1080°C erhöht. Das Bauteil wird bei dieser Temperatur für 6 Stunden gehalten. Ein Gasfluss von 1-2 l/h H₂ sorgt für die Aufrecherhaltung eines leichten Überdrucks von 3000 - 5000 Pa (30-50 mbar) gegenüber Normaldruck. Anschließend wird das Bauteil in Argonatmosphäre auf Raumtemperatur abgekühlt. Dies erfolgt zuerst durch ein 15-minütiges Spülen mit 2000 l/h H₂ und unter anschließender Zuleitung von 50 l/h Ar.

Die resultierende Spritzschicht weist hiernach im oberen Bereich eine A-luminiumkonzentration von 33 Gew.-% auf. Die entstandenen globulitischen Metalloxidpartikel haben eine Partikelgröße von 2 bis 18 µm und einen Anteil von 3,2 Gew.-%.

In einer weiteren Verfahrensvariante wird das APS-gespritzte Bauteil in einen Reaktionsraum mit einer Schüttung aus intermetallischem A1Cr-Spendergranulat gegeben. Der Reaktionsraum weist dabei die selben Merkmale auf wie bei der zweiten Verfahrensvariante. Das Bauteil mit der Spitzschicht wird von Raumtemperatur auf 1060°C aufgeheizt. Durch ein Ringdüsensystem werden HCl und H₂ durch die AlCr-Schüttung geleitet, so dass das HCl mit dem Aluminiumanteil des AlCr-Granulats zu Aluminiumtri- und Aluminiummonochlorid reagieren kann. Hierfür werden 10-25 l/h HCl zugegeben. Die Strömungsgeschwindigkeit durch die AlCr-Schüttung liegt dabei bei kleiner 4 m/h; hierdurch entsteht ein leichter Überdruck von etwa 3000 Pa (30 mbar) gegenüber Normaldruck. Das Bauteil wird bei 1060°C für 6 Stunden gehalten und danach mit 500 1/h H₂ gespült. Ab einer Temperatur von 750°C wird das Bauteil in Argonatmosphäre auf Raumtemperatur abgekühlt.

Die so erzeugte Schicht weist im äußeren Bereich eine Aluminiumkonzentration von 31,5 Gew-% auf und erreicht bei einer Thermowechselprüfung durchschnittlich 580 Lastwechsel.

## Patentansprüche

1. Hochtemperatur-, oxidations- und korrosionsbeständige Schutzschicht zum Aufbringen auf ein Substrat, insbesondere zum Aufbringen auf Teile von Turbinen oder Flugtriebwerken, bestehend aus einer Spritzschicht aus einem mittels APS-Verfahren gespritzten, metallischen Werkstoff gemäß der Formel MCrAlXAE mit M = Fe, Co, Ni, NiCo oder Co-Ni, X = Si, Ta, V, Nb, Pt, Pd und AE = Y, Ti, Hf, Zr, Yb mit 10 - 45 Gew.-% Cr, 1 - 10 Gew.-% Al, 0,25 - 15 Gew.-% X, 0,05 - 2 Gew.-% AE und Rest M als Matrixhauptelement, wobei nach dem Aufbringen der Spritzschicht auf das Substrat diese zumindest teilweise einem thermochemischen Abscheideprozess zur Abscheidung von Aluminium und Chrom oder von Aluminium und Silizium oder von Aluminium und Chrom und Silizium unterzogen wird, derart, dass die Schutzschicht von der Substratoberfläche zur Schichtoberfläche einen steigenden Legierungsgradienten an Aluminium und Chrom oder an Aluminium und Silizium oder an Aluminium und Chrom und Silizium sowie isolierte globulitische Metalloxidpartikel aufweist, wobei vor dem thermochemischen Abscheideprozess auftretende Oxid- und Nitridnetzwerke nicht mehr vorhanden sind.

2. Schutzschicht nach Anspruch 1, **dadurch gekennzeichnet, dass** der metallische Werkstoff in Pulverform vorliegt und die mittlere Partikelgröße des Pulvers zwischen 2µm und 80µm liegt.

3. Schutzschicht nach einem der vorhergehenden Ansprüche, **dadurch gekennzeichnet, dass** die Spritzschicht eine mittlere Schichtdicke zwischen 50µm und 400µm aufweist.

4. Schutzschicht nach einem der vorhergehenden Ansprüche, **dadurch gekennzeichnet, dass** der Al-Anteil im Bereich der Schichtoberfläche zwischen 25 und 40 Gew.-%, in den darunter liegenden Bereichen der Schutzschicht zwischen 20 und 40 Gew.-% und im Übergangsbereich zwischen der Schutzschicht und dem Substrat unter 20 Gew.-% beträgt.

5. Schutzschicht nach einem der vorhergehenden Ansprüche, **dadurch gekennzeichnet, dass** die isolierten globulitischen Metalloxidpartikel eine mittlere Partikelgröße zwischen 0,1 µm und 5 µm bei einer maximalen Größe von Einzelpartikeln von bis zu 25 µm aufweisen.

6. Schutzschicht nach einem der vorhergehenden Ansprüche, **dadurch gekennzeichnet, dass** die isolierten globulitischen Metalloxidpartikel einen Volumenanteil von 0,2 bis 6%, vorzugsweise 0,5 bis 2%, aufweisen.

7. Schutzschicht nach einem der vorhergehenden Ansprüche, **dadurch gekennzeichnet, dass** die globulitischen Metalloxidpartikel insbesondere aus Al₂O₃ und Cr₂O₃ oder deren Mischoxiden bestehen.

8. Schutzschicht nach einem der vorhergehenden Ansprüche, **dadurch gekennzeichnet, dass** an der Schichtoberfläche eine keramische Deckschicht ausgebildet ist.

9. Schutzschicht nach Anspruch 8, **dadurch gekennzeichnet, dass** zwischen der Schichtoberfläche und der keramischen Deckschicht eine Zwischenschicht bestehen aus Pt und/oder Pd mit einer Schichtdicke zwischen 0,1 und 10µm ausgebildet ist.

10. Verfahren zur Herstellung einer hochtemperatur-, oxidations- und korrosionsbeständigen Schutzschicht, wobei das Verfahren folgende Schritte umfasst:
a) Bereitstellung einer Spritzschicht durch atmosphärisches Plasmaspritzen (APS-verfahren) aus einem metallischen Werkstoff zum Aufbringen auf ein Substrat, insbesondere zum Aufbringen auf Teile von Turbinen oder Flugtriebwerkenwobei der metallische werkstoff gemäß der Formel MCrAIXAE mit M = Fe, Co, Ni, NiCo oder CoNi, X = Si, Ta, V, Nb, Pt, Pd und AE = Y. Ti, Hf, Zr, Yb mit 10 - 45 Ges.-% Cr, 1-10 Ges.-% Al, 0,25 - 15 Ges.-% X, 0,05 - 2 Gew.-% AE und Rest M als Matrixhauptelement zusammengesetzt ist;
b) Behandeln von zumindest einem Teil der Spritzschicht mittels eines thermochemischen Aluminium und Chrom- oder Aluminium und Silizium- oder Aluminium und Chrom und Silizium-Abscheideprozesses mit spezifisch hoher Al-Abscheideaktivität, derart, dass die Schutzschicht von der Substratoberfläche zur schichtoberfläche einen steigenden Legierungegradienten an Aluminium und Chrom oder an Aluminium und Silizium oder an Aluminium und Chrom und Silizium sowie isolierte globulitische Metalloxidpartikel auf weist, wobei vor dem thermochemischen Abscheideprozess auftretende Oxid- und Nitridnetzwerke nicht mehr vorhanden sind, und wobei der thermochemische Abscheideprozess folgende schritte umfasst:
b1) Aufheizen der Spritzschicht bzw. des Substrats mit der Spritzschicht in oxidierender Umgebung bezogen auf die Metalloxide der Spritzschicht;
b2) Abgabe von Aluminium und Chrom oder von Aluminium und Silizium oder von Aluminium und Chrom und Silizium über eine Gasphase oder durch direkten Kontakt bei Al-Gehalten der Umgebung von 25 bis 45 Gew.-% Al; und
b3) Abkühlen der Spritzschicht bzw. des Substrats mit der Spritzschicht in oxidierender Umgebung.

11. verfahren nach Anspruch 10, **dadurch gekennzeichnet, dass** im Verfahrensschritt b1) die Spritzschicht bzw. das Substrat mit der Spritzschicht auf bis zu 1100°C in einer gasförmigen Umgebung aus Ar, He und Anteilen von O₂ und/oder H₂O erhitzt wird, wobei der Partialdruck von O₂ in der gasförmigen Umgebung im chemischen Gleichgewicht mindestens um den Faktor 2 bis 10 höher ist als der Partialdruck von O₂ bei der Zersetzungsreaktion der in der Spritzschicht enthaltenen Metalloxide.

12. Verfahren nach Anspruch 11, **dadurch gekennzeichnet, dass** in der gasförmigen Umgebung bei Normaldruck ein O₂-Partialdruck von 1000 bis 40000 Pa (10 bis 400 mbar), vorzugsweise 2000 bis 30000 Pa (20 bis 300 mbar), bei einem Aufheizen bis zu 1100°C eingestellt ist.

13. Verfahren nach einem der Ansprüche 10 bis 12, **dadurch gekennzeichnet, dass** die Abgabe von Aluminium und Chrom oder von Aluminium und Silizium oder von Aluminium und Chrom und Silizium gemäß Verfahrensschritt b2) bei Temperaturen zwischen 900°C und 1150°C über eine Prozesshaltedauer zwischen 2 und 14 Stunden erfolgt.

14. Verfahren nach einem der Ansprüche 10 bis 13, **dadurch gekennzeichnet, dass** die Abgabe von Aluminium und Chrom oder von Aluminium und Silizium oder von Aluminium und Chrom und Silizium gemäß Verfahrensschritt b2) über eine Gasphase erfolgt, wobei die Gasphase Monohalogenid-Aluminiumverbindungen aufweist.

15. Verfahren nach Anspruch 14, **dadurch gekennzeichnet, dass** die Monohalogenid-Aluminiumverbindung unter Zuhilfenahme eines oder mehrerer Metallchloridsalze erzeugt wird.

16. Verfahren nach Anspruch 15, **dadurch gekennzeichnet, dass** das Metall der Metallchloridsalze aus der Gruppe der Alkali- oder Erdalkalimetalle gewählt wird.

17. Verfahren nach Anspruch 15, **dadurch gekennzeichnet, dass** das Metall der Metallchloridaalze aus der Gruppe Chrom, Nickel, Kobalt, Hafnium oder Wolfram gewählt wird.

18. Verfahren nach Anspruch 14, **dadurch gekennzeichnet, dass** die Monohalogenid-Aluminiumverbindung unter Zuhilfenahme von gasförmigem HCl erzeugt wird.

19. Verfahren nach Anspruch 18, **dadurch gekennzeichnet, dass** dem gasförmigen HCl Wasserstoff beigemischt wird.

20. Verfahren nach Anspruch 14, **dadurch gekennzeichnet, dass** die Monohalogenid-Aluminiumverbindungen einen Partialdruckanteil am Gesamtsystem von 2,5 bis 25%, vorzugsweise 5 bis 20% aufweisen.

## Claims

1. Protective layer which is resistant to high temperature, oxidation and corrosion for application to a substrate, in particular for application to parts of turbines or aircraft engines, comprising a sprayed layer of a metallic material, sprayed by means of the APS process, according to the formula MCrAlXAE, where
M = Fe, Co, Ni, NiCo or CoNi,
X = Si, Ta, V, Nb, Pt or Pd and
AE = Y, Ti, Hf, Zr or Yb, with
10-45 wt.% of Cr,
1-10 wt.% of Al,
0.25-15 wt. % of X,
0.05-2 wt.% of AE and the balance of M as the main matrix element,
wherein after application of the sprayed layer to the substrate this layer is at least partly subjected to a thermochemical deposition process for deposition of aluminium and chromium or of aluminium and silicon or of aluminium and chromium and silicon in a manner such that the protective layer has an alloying gradient of aluminium and chromium or of aluminium and silicon or of aluminium and chromium and silicon which increases from the substrate surface to the layer surface and isolated globulitic metal oxide particles, wherein oxide and nitride networks which occur before the thermochemical deposition process are no longer present.

2. Protective layer according to claim 1, **characterized in that** the metallic material is present in powder form and the average particle size of the powder is between 2 µm and 80 µm.

3. Protective layer according to one of the preceding claims, **characterized in that** the sprayed layer has an average layer thickness of between 50 µm and 400 µm.

4. Protective layer according to one of the preceding claims, **characterized in that** the Al content is between 25 and 40 wt.% in the region of the layer surface, between 20 and 40 wt.% in the regions of the protective layer underneath the surface and below 20 wt.% in the transition region between the protective layer and the substrate.

5. Protective layer according to one of the preceding claims, **characterized in that** the isolated globulitic metal oxide particles have an average particle size of between 0.1 µm and 5 µm with a maximum size of individual particles of up to 25 µm.

6. Protective layer according to one of the preceding claims, **characterized in that** the isolated globulitic metal oxide particles have a volume content of from 0.2 to 6%, preferably 0.5 to 2%.

7. Protective layer according to one of the preceding claims, **characterized in that** the globulitic metal oxide particles are made up in particular of Al₂O₃ and Cr₂O₃ or mixed oxides thereof.

8. Protective layer according to one of the preceding claims, **characterized in that** a ceramic top layer is formed on the layer surface.

9. Protective layer according to claim 8, **characterized in that** an intermediate layer comprising Pt and/or Pd with a layer thickness of between 0.1 and 10 µm is formed between the layer surface and the ceramic top layer.

10. Process for the production of a protective layer which is resistant to high temperature, oxidation and corrosion, wherein the process comprises the following steps:
a) provision of a sprayed layer by atmospheric plasma spraying (APS process) made of a metallic material for application to a substrate, in particular for application to parts of turbines or aircraft engines, wherein the metallic material is composed according to the formula MCrAlXAE, where
M = Fe, Co, Ni, NiCo or CoNi,
X = Si, Ta, V, Nb, Pt or Pd and
AE = Y, Ti, Hf, Zr or Yb, with
10-45 wt.% of Cr,
1-10 wt.% of Al,
0.25-15 wt.% of X,
0.05-2 wt.% of AE and the balance of M as the main matrix element;
b) treatment of at least a part of the sprayed layer by means of a thermochemical aluminium and chromium or aluminium and silicon or aluminium and chromium and silicon deposition process with a specifically higher Al deposition activity in a manner such that the protective layer has an alloying gradient of aluminium and chromium or of aluminium and silicon or of aluminium and chromium and silicon which increases from the substrate surface to the layer surface and isolated globulitic metal oxide particles, wherein oxide and nitride networks which occur before the thermochemical deposition process are no longer present, and wherein the thermochemical deposition process comprises the following steps:
b1) heating of the sprayed layer or the substrate with the sprayed layer in an oxidizing environment with respect to the metal oxides of the sprayed layer;
b2) release of aluminium and chromium or of aluminium and silicon or of aluminium and chromium and silicon via a gas phase or by direct contact at Al contents of the environment of from 15 to 45 wt.% of Al; and
b3) cooling of the sprayed layer or the substrate with the sprayed layer in an oxidizing environment.

11. Process according to claim 10, **characterized in that** in process step b1) the sprayed layer or the substrate with the sprayed layer is heated to up to 1,100°C in a gaseous environment of Ar, He and contents of O₂ and/or H₂O, wherein the partial pressure of O₂ in the gaseous environment in chemical equilibrium is higher than the partial pressure of O₂ in the decomposition reaction of the metal oxides contained in the sprayed layer by at least a factor of 2 to 10.

12. Process according to claim 11, **characterized in that** an O₂ partial pressure of from 1,000 to 40,000 Pa (10 to 400 mbar), preferably 2,000 to 30,000 Pa (20 to 300 mbar), during a heating up of up to 1,100°C is established in the gaseous environment under normal pressure.

13. Process according to one of claims 10 to 12, **characterized in that** the release of aluminium and chromium or of aluminium and silicon or of aluminium and chromium and silicon according to process step b2) takes place at temperatures of between 900°C and 1,150°C over a process holding time of between 2 and 14 hours.

14. Process according to one of claims 10 to 13, **characterized in that** the release of aluminium and chromium or of aluminium and silicon or of aluminium and chromium and silicon according to process step b2) takes place via a gas phase, wherein the gas phase contains monohalide aluminium compounds.

15. Process according to claim 14, **characterized in that** the monohalide aluminium compound is produced with the aid of one or more metal chloride salts.

16. Process according to claim 15, **characterized in that** the metal of the metal chloride salts is chosen from the group of alkali or alkaline-earth metals.

17. Process according to claim 15, **characterized in that** the metal of the metal chloride salts is chosen from the group of chromium, nickel, cobalt, hafnium or tungsten.

18. Process according to claim 14, **characterized in that** the monohalide aluminium compound is produced with the aid of gaseous HCl.

19. Process according to claim 18, **characterized in that** hydrogen is admixed to the gaseous HCl.

20. Process according to claim 14, **characterized in that** the monohalide aluminium compounds have a partial pressure content in the total system of from 2.5 to 25%, preferably 5 to 20%.

## Revendications

1. Couche protectrice résistant aux hautes températures, à l'oxydation et à la corrosion, à appliquer sur un substrat, en particulier à appliquer sur des parties de turbines ou de groupes motopropulseurs, consistant en une couche pulvérisée d'un matériau métallique pulvérisé par le procédé APS, selon la formule MCrAlXAE, avec M = Fe, Co, Ni, NiCO ou CoNi, X = Si, Ta, V, Nb, Pt, Pd et AE = Y, Ti, Hf, Zr, Yb avec 10-45 % en poids de Cr, 1-10 % en poids de Al, 0,25-15 % en poids de X, 0,05-2 % en poids de AE, et le reste est M en tant qu'élément principal de matrice, où après l'application de la couche pulvérisée sur le substrat, celle-ci est soumise au moins partiellement, à un processus thermochimique de séparation, pour la séparation de l'aluminium et du chrome ou de l'aluminium et du silicium ou de l'aluminium et du chrome et du silicium, de sorte que la couche protectrice présente depuis la surface du substrat jusqu'à la surface de la couche, un gradient croissant d'alliage en aluminium et chrome ou en aluminium et silicium ou en aluminium et chrome et silicium, ainsi que des particules globulaires isolées d'oxyde métallique, où les réseaux d'oxyde et de nitrure présents avant le processus thermochimique de séparation ne sont plus présents.

2. Couche protectrice selon la revendication 1, **caractérisée en ce que** le matériau métallique se présente sous une forme pulvérulente et la taille moyenne des particules de poudre se situe dans l'intervalle allant de 2 µm à 80 µm.

3. Couche protectrice selon l'une des revendications précédentes, **caractérisée en ce que** la couche pulvérisée présente une épaisseur moyenne située dans l'intervalle allant de 50 µm à 400 µm.

4. Couche protectrice selon l'une des revendications précédentes, **caractérisée en ce que** la proportion de Al au niveau de la surface de la couche se situe dans l'intervalle allant de 25 à 40 % en poids, dans les zones se trouvant en-dessous, de la couche protectrice, dans l'intervalle allant de 20 à 40 % en poids et dans la zone de transition entre la couche protectrice et le substrat, sous 20 % en poids.

5. Couche protectrice selon l'une des revendications précédentes, **caractérisée en ce que** les particules globulaires isolées d'oxyde métallique présentent une taille moyenne des particules allant de 0,1 µm à 5 µm, avec une taille maximale des particules individuelles allant jusqu'à 25 µm.

6. Couche protectrice selon l'une des revendications précédentes, **caractérisée en ce que** les particules globulaires isolées d'oxyde métallique présentent une proportion en volume de 0,2 à 6 %, de préférence de 0,5 à 2 %.

7. Couche protectrice selon l'une des revendications précédentes, **caractérisée en ce que** les particules globulaires d'oxyde métallique consistent en particulier, en Al₂O₃ et Cr₂O₃ ou en leurs oxydes mixtes.

8. Couche protectrice selon l'une des revendications précédentes, **caractérisée en ce que** sur la surface de la couche, une couche céramique de couverture est formée.

9. Couche protectrice selon la revendication 8, **caractérisée en ce qu'**entre la surface de la couche et la couche céramique de couverture, une couche intermédiaire est formée, laquelle consiste en Pt et/ou Pd avec une épaisseur de couche située dans l'intervalle allant de 0,1 à 10 µm.

10. Procédé de préparation d'une couche protectrice résistant aux hautes températures, à l'oxydation et à la corrosion, le procédé comprenant les étapes suivantes :
a) préparation d'une couche pulvérisée par pulvérisation atmosphérique par plasma (procédé APS) d'un matériau métallique à appliquer sur un substrat, en particulier à appliquer sur des parties de turbines ou de groupes motopropulseurs, le matériau métallique se composant de la formule MCrAlXAE, avec M = Fe, Co, Ni, NiCO ou CoNi, X = Si, Ta, V, Nb, Pt, Pd et AE = Y, Ti, Hf, Zr, Yb avec 10-45 % en poids de Cr, 1-10 % en poids de Al, 0,25-15 % en poids de X, 0,05-2 % en poids de AE, et le reste est M en tant qu'élément principal de matrice ;
b) traitement d'au moins une partie de la couche pulvérisée à l'aide d'un processus thermochimique de séparation de l'aluminium et du chrome ou de l'aluminium et du silicium ou de l'aluminium et du chrome et du silicium, avec une réactivité spécifique de séparation de Al plus élevée, de sorte que la couche protectrice présente depuis la surface du substrat jusqu'à la surface de la couche, un gradient croissant d'alliage en aluminium et chrome ou en aluminium et silicium ou en aluminium et chrome et silicium, ainsi que des particules globulaires isolées d'oxyde métallique, où les réseaux d'oxyde et de nitrure présents avant le processus thermochimique de séparation ne sont plus présents, et où le processus thermochimique de séparation comprend les étapes suivantes :
b1) chauffage de la couche pulvérisée et respectivement, du substrat avec la couche pulvérisée dans un environnement oxydant par rapport à l'oxyde métallique de la couche pulvérisée ;
b2) dépôt de l'aluminium et du chrome ou de l'aluminium et du silicium ou de l'aluminium et du chrome et du silicium par une phase gazeuse ou par contact direct à des teneurs en Al de l'environnement de 25 à 45 % en poids de Al, et
b3) refroidissement de la couche pulvérisée et respectivement, du substrat avec la couche pulvérisée dans un environnement oxydant.

11. Procédé selon la revendication 10, **caractérisé en ce que** dans l'étape de procédé b1), la couche pulvérisée et respectivement, le substrat avec la couche pulvérisée est chauffée jusqu'à 1100°C dans un environnement gazeux de Ar, He et des parties de O₂ et/ou H₂O, où la pression partielle de O₂ dans l'environnement gazeux à l'équilibre chimique est supérieure au moins d'un facteur 2 à 10 à la pression partielle de O₂ lors de la réaction de décomposition de l'oxyde métallique présent dans la couche pulvérisée.

12. Procédé selon la revendication 11, **caractérisé en ce que** dans l'environnement gazeux à pression normale, on ajuste une pression partielle de O₂ allant de 1000 à 40 000 Pa (10 à 400 mbar), de préférence de 2000 à 30 000 Pa (20 à 300 mbar), lors du chauffage jusqu'à 1100°C.

13. Procédé selon l'une des revendications 10 à 12, **caractérisé en ce que** le dépôt de l'aluminium et du chrome ou de l'aluminium et du silicium ou de l'aluminium et du chrome et du silicium selon l'étape de procédé b2) est réalisé à des températures allant de 900°C à 1150°C pendant une période allant de 2 à 14 heures.

14. Procédé selon l'une des revendications 10 à 13, **caractérisé en ce que** le dépôt de l'aluminium et du chrome ou de l'aluminium et du silicium ou de l'aluminium et du chrome et du silicium selon l'étape de procédé b2) est réalisé par une phase gazeuse, où la phase gazeuse présente des composés monohalogénure d'aluminium.

15. Procédé selon la revendication 14, **caractérisé en ce que** le composé monohalogénure d'aluminium est produit à l'aide d'un ou de plusieurs sels chlorure métallique.

16. Procédé selon la revendication 15, **caractérisé en ce que** le métal du sel chlorure métallique est choisi parmi le groupe des métaux alcalins ou alcalino-terreux.

17. Procédé selon la revendication 15, **caractérisé en ce que** le métal du sel chlorure métallique est choisi parmi le groupe du chrome, du nickel, du cobalt, du hafnium et du tungstène.

18. Procédé selon la revendication 14, **caractérisé en ce que** le composé monohalogénure d'aluminium est produit à l'aide de HCl gazeux.

19. Procédé selon la revendication 18, **caractérisé en ce que** le HCl gazeux est mélangé à de l'hydrogène.

20. Procédé selon la revendication 14, **caractérisé en ce que** les composés monohalogénure d'aluminium présentent une proportion en pression partielle dans le système total allant de 2,5 à 25 %, de préférence de 5 à 20 %.
